# EUROPEAN PATENT SPECIFICATION

(11) **EP 3 459 689 B1**
(45) Date of publication and mention of the grant of the patent: **24.02.2021**
(21) Application number: 17799660.0
(22) Date of filing: 17.05.2017
(51) Int. Cl.: B25J 11/00, B25J 9/00, B25J 9/16, B25J 19/02, A47L 9/28, G05D 1/02

(54) **MOBILE ROBOT AND CONTROL METHOD THEREFOR**
MOBILER ROBOTER UND STEUERUNGSVERFAHREN DAFÜR
ROBOT MOBILE ET SON PROCÉDÉ DE COMMANDE

(30) Priority: 17.05.2016 KR 20160060444; 29.08.2016 KR 20160110295; 27.10.2016 KR 20160141106
(43) Date of publication of application: 27.03.2019
(73) Proprietor: LG Electronics Inc., Seoul 07336 (KR)
(72) Inventor: JUN, Woochan, Seoul 08592 (KR); SUNG, Chulmo, Seoul 08592 (KR)
(74) Representative: Vossius & Partner Patentanwälte Rechtsanwälte mbB
(86) International application number: PCT/KR2017/005133
(87) International publication number: WO 2017/200303

(56) References cited:
- CN-U- 205 031 182
- CN-U- 205 031 182
- JP-A- 2013 104 858
- KR-A- 20150 050 160
- KR-A- 20160 043 841
- US-A1- 2007 265 740
- US-A1- 2014 257 622
- US-A1- 2015 115 876
- US-A1- 2015 168 954
- US-A1- 2015 168 954

## Description

### [Technical Field]

The present invention relates to a mobile robot and a method of controlling the same, and more particularly, to a mobile robot and a method of controlling the same, for detecting and avoiding an obstacle.

### [Background Art]

In general, a mobile robot is a device that absorbs foreign substances such as dust from a floor and automatically cleans the floor while autonomously driving within a clean target area without user manipulation.

In general, the mobile robot detects a distance to an obstacle such as furniture, stationery, and a wall, which are installed in a cleaning area, and accordingly, maps a cleaning area or controls driving of a left wheel and a right wheel to perform obstacle avoidance.

Conventionally, a distance by which a mobile robot moves is measured through a sensor for monitoring a ceiling or a floor and a distance to an obstacle is calculated based on the measurement result, but this is an indirect method of estimating the distance to the obstacle based on a moving distance of a mobile robot, and thus, when a moving distance of a mobile robot is not capable of being accurately measured due to unevenness of the floor, or the like, the distance to the obstacle inevitably has an error. In particular, a distance measurement method that is mainly used in the mobile robot uses infrared rays or ultrasonic waves, and thus, there is a problem in that a large amount of light or sound is scattered by an obstacle to cause a significant error in distance measurement.

Accordingly, a technology for emitting light in a specific pattern toward a front side of a mobile robot, capturing an image, extracting a pattern from the captured image, recognizing a situation of an obstacle within a cleaning area based on the extracted pattern, and controlling driving has been applied. For example,
Korean Patent Publication No. 10-2013-0141979 (hereinafter, referred to as '979 invention') discloses a mobile robot including a light source unit for emitting light with a cross pattern and a camera unit for acquiring an image of a front side of a cleaning device.

However, such a conventional mobile robot is configured to emit light at a predetermined angle from one light source, and thus, there is a limit in a range for detecting an obstacle and it is difficult to recognize a three-dimensional shape of an obstacle with a predetermined height.

In addition, to recognize and avoid a cliff such as a stair, a conventional mobile robot repeatedly approaches the cliff to check the cliff rather than determining the cliff once to avoid the cliff, and thus, there is a problem in that a long time is taken to avoid the cliff.

US 2015/168954 A1 discloses a mobile robot having a first pattern emission unit, a second pattern emission unit and an image acquirer and controller according to the invention.

US 2007/265740 A1 relates to an obstacle and cliff avoiding system, and more particularly, to a simple-structured and inexpensive movable chassis having at least a displacement sensor arranged therein for detecting whether there is an obstacle or a drop in front of the moving direction of the movable chassis and thus controlling the movable chassis to maneuver around the obstacle or the drop.

### [Disclosure]

### [Technical Problem]

Therefore, the present invention has been made in view of the above problems, and it is an object of the present invention to provide a mobile robot for determining whether a cliff is present to be driven to rapidly avoid the cliff using an emitted pattern when the mobile robot comes in contact with a cliff such as a stair while being driven, and a method of controlling the mobile robot.

### [Technical Solution]

In accordance with the present invention, the above and other objects can be accomplished by the provision of a mobile robot including a body driven in a cleaning area and for absorbing foreign substances on a floor in the cleaning area, a first pattern emission unit disposed on a front surface of the body and for emitting first pattern light toward a lower side of a front side of the body, a second pattern emission unit disposed on the front surface of the body, disposed below the first pattern emission unit, and for emitting second pattern light toward an upper side of the front side of the body, an image acquirer disposed on the front surface of the body and for acquiring an image of the front side of the body, and a controller for detecting a first light pattern corresponding to the first pattern light and a second light pattern corresponding to the second pattern light from the acquired image input from the image acquirer, determining an obstacle, and performing control to pass or avoid the obstacle, wherein the controller determines a cliff based on a shape of the first light pattern marked in the acquired image and controls the mobile robot to be driven along a path along which the mobile robot does not fall off the cliff.

In accordance with another aspect of the present invention, there is provided a method of controlling a mobile robot, including emitting first pattern light and second pattern light and driving the mobile robot while capturing an image positioned in front of the mobile robot, sensing a first light pattern corresponding to the first pattern light and a second light pattern corresponding to the second pattern light from the captured acquired image, detecting an obstacle from the first light pattern or the second light pattern, detecting a cliff based on a shape of the first light pattern marked in the acquired image, among a plurality of obstacles, and driving the mobile robot along a path along which the mobile robot does not fall off the cliff to avoid the cliff.

### [Advantageous Effects]

A mobile robot and a method of controlling the same according to the present invention may obtain more detailed information on an obstacle using patterns disposed and emitted up and down, and in particular, may preferentially determine whether a cliff is present prior to approach a cliff such as a stair and may determine a height of the cliff to determine whether the mobile robot is capable of being driven, and thus, may differentiate between a threshold and a cliff such as a stair to be driven or avoid the obstacle, may be effectively driven due to the rapid determination and operation of the mobile obstacle, and may prevent the mobile robot from falling off the cliff such as a stair.

### [Description of Drawings]

FIG. 1A is a perspective view of a mobile robot according to an exemplary embodiment of the present invention.
FIG. 1B is a perspective view of a mobile robot according to another exemplary embodiment of the present invention.
FIG. 2 is a diagram showing a horizontal viewing angle of the mobile robot of FIG. 1.
FIG. 3A is a front view of the mobile robot of FIG. 1A.
FIG. 3B is a front view of the mobile robot of FIG. 1B.
FIG. 4 is a diagram showing a bottom surface of the mobile robot of FIG. 1.
FIG. 5 is a block diagram showing main components of the mobile robot of FIG. 1.
FIG. 6 is a front view and a side view of an obstacle detector according to the first embodiment.
FIG. 7 is a diagram showing a pattern emission range and an obstacle detection range of the obstacle detector of FIG. 6.
FIG. 8 is a front view and a side view of an obstacle detector according to the second embodiment of the present invention.
FIG. 9 is a diagram showing a pattern emission range and an obstacle detection range of the obstacle detector of FIG. 8.
FIG. 10 is a diagram showing a pattern light emitted by the first pattern emission unit shown in FIG. 1A.
FIG. 11 is a diagram showing an example of a shape of a pattern emitted to an obstacle by the mobile robot shown in FIG. 1A.
FIG. 12 is a diagram showing pattern light shown in FIG. 1B.
FIG. 13 is a diagram sowing an acquired image depending on a change in a position of the mobile robot shown in FIG. 1B.
FIG. 14 is a diagram showing an acquired image of pattern light emitted to an obstacle of the mobile robot shown in FIG. 1B.
FIG. 15 is a diagram for explanation of a method of avoiding a cliff of a mobile robot according to an exemplary embodiment of the present invention.
FIG. 16 is a lateral perspective view of an operation of the mobile robot of FIG. 15.
FIG. 17 is a diagram showing an example of a pattern emitted from a mobile robot when the mobile robot avoids a cliff in FIG. 15.
FIG. 18 is a flowchart showing a method of avoiding a cliff of a mobile robot according to an exemplary embodiment of the present invention.

### [Best Mode]

Hereinafter, the present invention will be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. Throughout this specification, like reference numerals in the drawings denote like elements. In addition, a mobile robot may include a controller and units, which are embodied as one or more processors or are embodied as a hardware device.

Reference will now be made in detail to the exemplary embodiments of the present invention, examples of which are illustrated in the accompanying drawings.

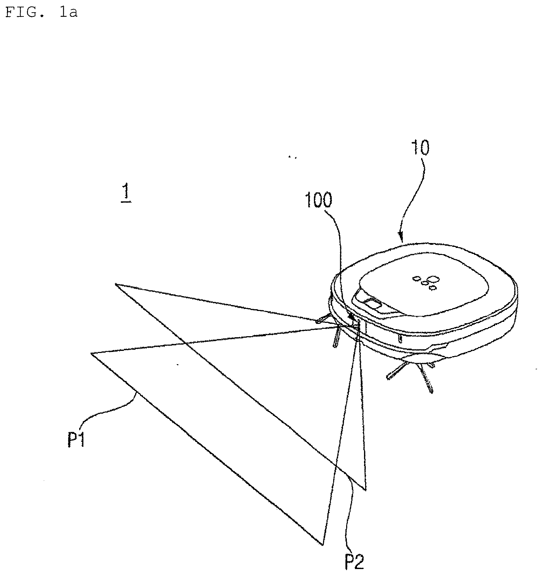

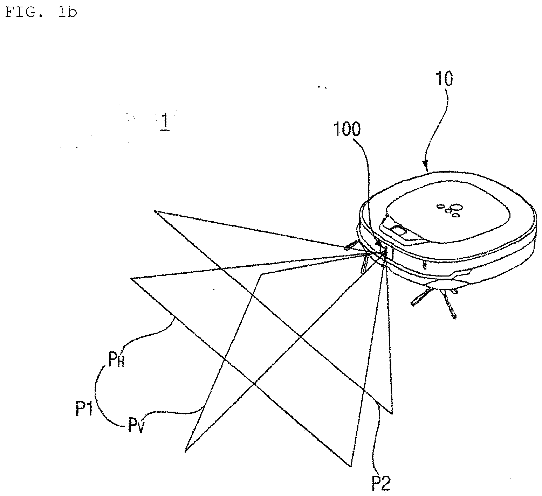

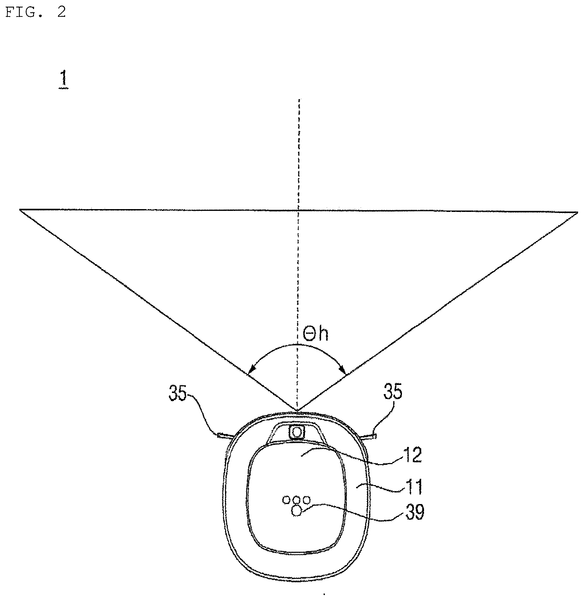

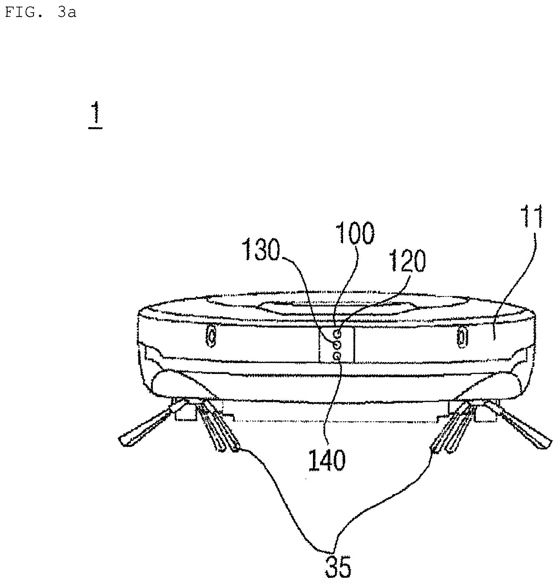

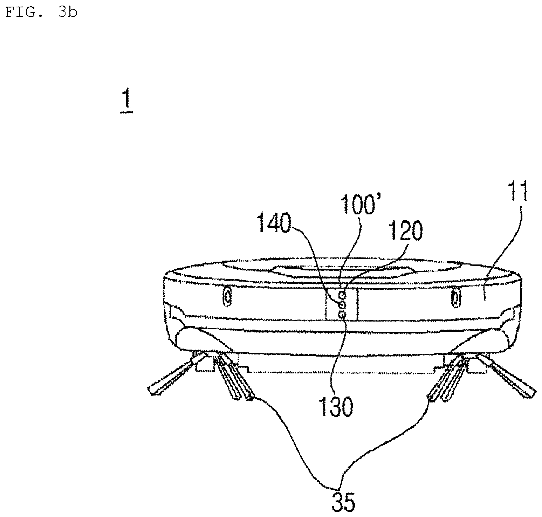

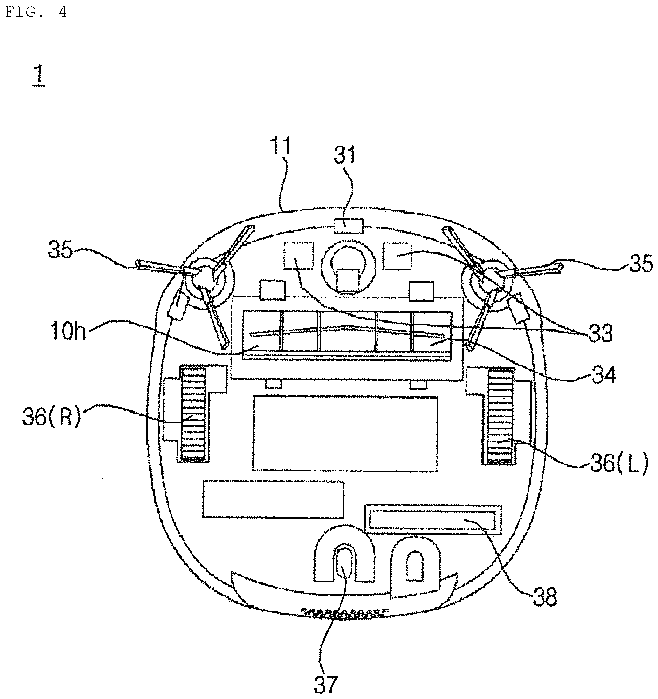

FIG. 1A is a perspective view of a mobile robot according to an exemplary embodiment of the present invention. FIG. 1B is a perspective view of a mobile robot according to another exemplary embodiment of the present invention. FIG. 2 is a diagram showing a horizontal viewing angle of the mobile robot of FIG. 1. FIG. 3A is a front view of the mobile robot of FIG. 1A. FIG. 3B is a front view of the mobile robot of FIG. 1B. FIG. 4 is a diagram showing a bottom surface of the mobile robot of FIG. 1.

Referring to FIGS. 1 to 4, a mobile robot 1 according to an exemplary embodiment of the present invention may be moved along a floor of a cleaning area, and may include a body 10 for absorbing foreign substances such as dust on the floor and an obstacle detection unit 100 disposed on a front surface of the body 10.

The body 10 may include a casing 11 that forms an outer appearance and forms a space for accommodating therein components included in the body 10, an absorption unit 34 that is disposed in the casing 11 and absorbs foreign substances such as dust or waste, and a left wheel 36(L) and a right wheel 36(R) that are rotatably installed in the casing 11. As the left wheel 36(L) and the right wheel 36(R) are rotated, the body 10 may be moved along the floor of the cleaning area, and during this procedure, foreign substances may be absorbed through the absorption unit 34.

The absorption unit 34 may include a cleaning roller or a brush, an absorption fan (not shown) for generating absorption force, and an absorption inlet 10h for absorbing air current generated via rotation of an absorption fan. The absorption unit 34 may include a filter (not shown) for collecting foreign substances in the air current absorbed through the absorption inlet 10h and a foreign substances collection container (not shown) in which foreign substances collected by the filter are accumulated.

The body 10 may include a driving driver 300 (or a driving module) for driving the left wheel 36(L) and the right wheel 36(R). The driving driver may include at least driving motor. For example, at least one driving motor may include a left wheel driving motor for rotation of the left wheel 36(L) and a right wheel driving motor for rotation of the right wheel 36(R).

An operation of the left wheel driving motor and the right wheel driving motor may be independently controlled by a driving controller of a controller, and thus, the body 10 may be moved forward, may be moved backward, or may turn. For example, when the body 10 is moved forward, the left wheel driving motor and the right wheel driving motor may be rotated in the same direction, but when the left wheel driving motor and the right wheel driving motor are rotated at different speeds or are rotated in different directions, a driving direction of the body 10 may be changed. The body 10 may further include at least one auxiliary wheel 37 for stably supporting the body 10.

The body 10 may further include a plurality of brushes 35 that is positioned at a front side of a bottom surface unit of the casing 11 and has brushes including a plurality of wings that radially extend. Through rotation of the plurality of brushes 35, dusts may be removed from a floor of a cleaning area, and the dusts collected from the floor may be absorbed through the absorption inlet 10h and may be collected in a collection container.

The body 10 may further include a control panel 39 that is disposed on an upper surface of the casing 11 and receives various commands for control of the mobile robot 1 from a user.

The obstacle detection unit 100 (or an obstacle detection module) may be disposed on a front surface of the body 10.

The obstacle detection unit 100 may be fixed to the front surface of the casing 11 and may include a first pattern emission unit 120, a second pattern emission unit 130, and an image acquirer 140.

Pattern light emitted by the first pattern emission unit 120 and the second pattern emission unit 130 may be emitted in different patterns shown in FIGS. 1A and 1B. The first and second pattern emission units of FIGS. 1A and 1B are denoted by the same reference numeral. A shape of the emitted pattern is not limited to the drawings.

As shown in FIG. 1A, the first pattern emission unit 120 may emit light of a first pattern P1 (hereinafter, referred to first pattern light) toward a lower side of the front side of the body 10. The second pattern emission unit 120 may emit light of a second pattern P2 (hereinafter, referred to as second pattern light) toward an upper side of the front side of the body 10. The first pattern emission unit 120 and the second pattern emission unit 130 may be formed to emit the first pattern light and the second pattern light in the form of a straight line and in a horizontal direction when the first pattern light and the second pattern light are incident on a floor or an obstacle.

As shown in FIG. 1B, the first pattern emission unit 120 may emit light of an 11^{th} pattern P11 (hereinafter, referred to as 11^{th} pattern light) toward a lower side of the front side of the body 10. Accordingly, the 11^{th} pattern light P11 may be emitted toward the floor of the cleaning area. The 11^{th} pattern light P11 may be configured in a cross pattern in which a horizontal line Ph and a vertical line Pv cross each other.

The second pattern emission unit 120 may emit light of a 12^{th} pattern P12 (hereinafter, referred to as 12^{th} pattern light) toward an upper side of the front side of the body 10. The 12^{th} pattern light may be configure in a straight form and may be formed in parallel to the horizontal line Ph of the 11^{th} pattern light.

As shown in FIG. 3A, the obstacle detection unit 100 according to a first embodiment of the present invention may be configured in such a way that the image acquirer 140 is disposed below the first pattern emission unit 120 and the second pattern emission unit 130 in a line.

As shown in FIG. 3B, an obstacle detection unit 100' according to a second embodiment of the present invention may be configured in such a way that the image acquirer 140 is disposed between the first pattern emission unit 120 and the second pattern emission unit 130 in a line. The image acquirer 140 may be disposed in such a way that distances to the center of the first pattern emission unit 120 and to the center of the second pattern acquirer 140 from the image acquirer 140, that is, distances to the first pattern emission unit and the second pattern emission unit from the image acquirer 140 are the same.

In the obstacle detector according to the first and second embodiment, shapes of the pattern of light emitted from the first pattern emission unit and the second pattern emission unit may be any form of the straight line described above with reference to FIG. 1A and the cross pattern described above with reference to FIG. 1B.

As another example, one or more obstacle detectors may be further disposed on any one of an upper surface and a lateral surface of the body 10, and a floor as well as a front surface of the body 10.

The first pattern emission unit and the second pattern emission unit of the obstacle detector may be configured separately or configured as one module. For example, a lens, a splitter, a mirror, or a component for transmitting a light pattern may be included in the pattern emission unit, and the first light pattern and the second light pattern may be emitted from one pattern emission unit.

As shown in FIG. 4, the body 10 may include a rechargeable battery 38, and a charging terminal 33 of the battery 38 may be connected to a commercial power source (e.g., a power socket in the home) or the body 10 may be docked on a separate charging stand (not shown) connected to the commercial power source and may be connected to the commercial power source to recharge the battery 38. Electrical components included in the mobile robot 1 may receive power from the battery 38, and accordingly, when the battery 38 is recharged, the mobile robot 1 may autonomously drive in a state in which the mobile robot 1 is electrically separated from the commercial power source.

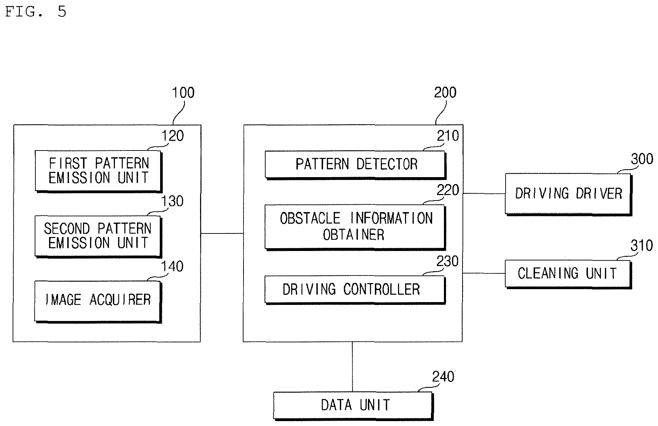

FIG. 5 is a block diagram showing main components of the mobile robot of FIG. 1.

The mobile robot 1 may include the driving driver 300, a cleaning unit 310, a data unit 240, the obstacle detection unit 100, and a controller 200 for controlling an overall operation.

The controller 200 may be embodied as one or more processors or may be embodied as a hardware device.

The controller 200 may include a driving controller 230 for control of the driving driver 300. An operation of the left wheel driving motor and an operation of the right wheel driving motor may be independently controlled by the driving controller 230, and thus, the body 10 may drive straight or rotate.

The controller 200 may include a pattern detector 210 for analyzing data input from the obstacle detection unit 100 to detect a pattern, and an obstacle information obtainer 220 for determining an obstacle from the pattern.

The pattern detector 210 may detect the light patterns P1 and P2 from the image (acquired image) acquired by the image acquirer 140. Hereinafter, the light pattern is exemplified with respect to the first and second pattern light P1 and P2 of FIG. 1A, but the light pattern with respect to the 11^{th} and 12^{th} pattern light of FIG. 1B may be applied in the same way.

The pattern detector 210 may detect features such as a dot, a line, and a surface from predetermined pixels constituting the acquired image, and may detect a dot, a line, and a surface constituting the light patterns P1 and P2 or the light patterns P1 and P2 based on the detected feature.

The obstacle information obtainer 220 may determine whether an obstacle is present and may determine a shape of the obstacle based on the pattern detected from the pattern detector 210.

The driving driver 300 may include at least one driving motor and may drive the mobile robot 1 according to a control command of the driving controller 230. As described above, the driving driver 300 may include the left wheel driving motor for rotation of the left wheel 36(L) and the right wheel driving motor for rotation of the right wheel 36(R).

The cleaning unit 310 may operate the brush to make dust or foreign substances about the mobile robot 1 be easily absorbed and may operate an absorption device to absorb dust or foreign substances. The cleaning unit 310 may control an operation of the absorption fan included in the absorption unit 34 for absorbing foreign substances such as dust or waste to make dust be put into the foreign substances collection container through the absorption inlet.

The data unit 240 may store the acquired image input from the obstacle detection unit 100, may store reference data for determination of an obstacle by the obstacle information obtainer 220, and may store obstacle information on the detected obstacle. The data unit 240 may store control data for control of an operation of the mobile robot 1 and data based on a cleaning mode of the mobile robot 1 and may store a map that is generated or received from the outside.

The data unit 240 may store data readable by a micro processor and may include a hard disk drive (HDD), a solid state disk (SSD), a silicon disk drive (SDD), ROM, RAM, CD-ROM, a magnetic tape, a floppy disk, and an optical data storage device.

The obstacle detection unit 100 may include the first pattern emission unit 120, the second pattern emission unit 130, and the image acquirer 140.

The obstacle detection unit 100 may be configured in such a way that the first pattern emission unit 120, the second pattern emission unit 130, and the image acquirer 140 are installed on the front surface of the body 10, emit the first and second pattern light P1 and P2 to the front side of the mobile robot 1, and photograph the emitted pattern light to acquire an image.

The controller 200 may store the acquired image in the data unit 240 and the pattern detector 210 may analyzes the acquired image to extract a pattern. That is, the pattern detector 210 may extract the light pattern obtained by emitting patter light emitted from the first pattern emission unit or the second pattern emission unit to a floor or an obstacle. The obstacle information obtainer 220 may determine the obstacle based on the extracted light pattern.

The controller 200 may control the driving driver 300 to determine the obstacle from the acquired image input from the obstacle detection unit 100 and to change a moving direction or a driving path to enable driving while avoiding the obstacle.

Since the mobile robot 1 falls in the case of a cliff among the obstacles, the controller 200 may detect the cliff through the acquired image and may recheck whether the cliff is present through an included cliff sensor (not shown), and may control the mobile robot 1 not to fall off the cliff. When the controller 200 determines a current object as the cliff, the controller 200 may determine whether the pattern is changed based on the acquired image and may control the driving driver 300 to enable driving along the cliff.

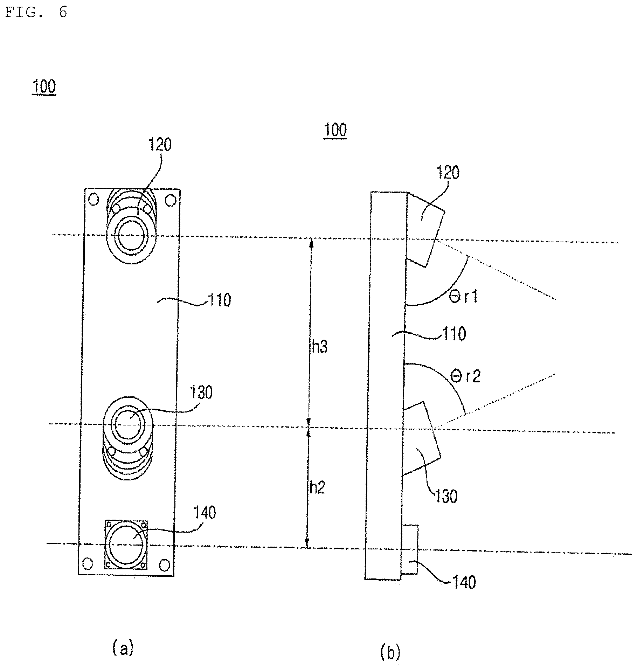

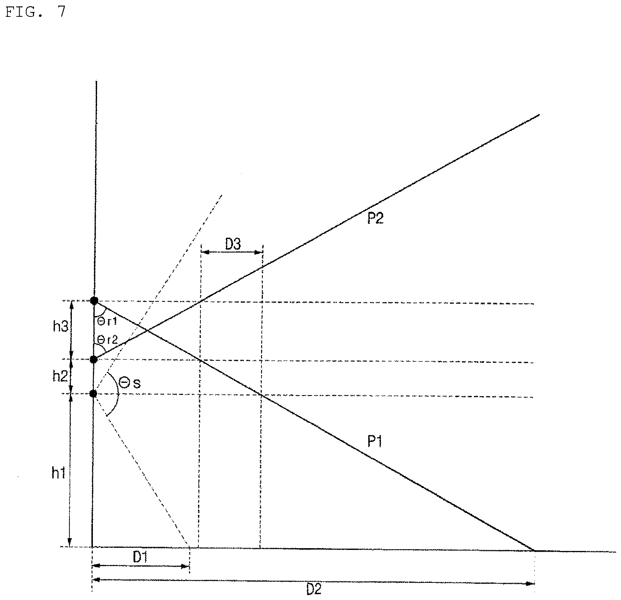

FIG. 6 is a front view and a side view of an obstacle detector according to the first embodiment. FIG. 7 is a diagram showing a pattern emission range and an obstacle detection range of the obstacle detector of FIG. 6. FIG. 6A is a front view of the obstacle detector and FIG. 6B is a side view of the obstacle detector.

As shown in FIGS. 6A and 6B, the obstacle detection unit 100 according to the first embodiment may include the first and second pattern emission units 120 and 130 that function as a light source, and an optical pattern projection element (OPPE) for transmitting light emitted from the light source to generate a predetermined pattern. The light source may be a laser diode (LD), a light emitting diode (LED), or the like. Since a laser beam has excellent feature in terms of monochromatic feature, straightness, and connection features compared with other light sources, it may be possible to precisely measure a distance, and in particular, there is a problem in that infrared rays or visible rays have a large difference in terms of the precision of distance measurement depending on a factor such as color or material of the object, and thus, a laser diode (LD) may be desirably used as a light source. A pattern generation unit may include a lens and a diffractive optical element (DOE). Depending on the configuration of a pattern generation unit included in each of the pattern emission units 120 and 130, light with various patterns may be emitted.

The first pattern emission unit 120 may emit the first pattern light P1 toward a lower side of the front side of the body 10. Accordingly, the first pattern light P1 may be incident on a floor of a cleaning area.

The first pattern light P1 may be configured in the form of a horizontal line.

The first pattern light P1 may also be configured in the form of a cross pattern in which a horizontal line and a vertical line cross each other.

The first pattern emission unit 120, the second pattern emission unit 130, and the image acquirer 140 may be perpendicularly arranged in a line. The image acquirer 140 may be disposed below the first pattern emission unit 120 and the second pattern emission unit 130, but the present invention is not limited thereto, and thus, the image acquirer 140 may be disposed above the first pattern emission unit and the second pattern emission unit.

According to an exemplary embodiment, the first pattern emission unit 120 may be disposed in a relatively upper side to emit the first pattern light P1 downward to detect an obstacle positioned below the first pattern emission unit 120, and the second pattern emission unit 130 may be positioned below the first pattern emission unit 120 to the second pattern light P2 forward and upward. Accordingly, the second pattern light P2 may be incident on an obstacle or a predetermined portion of an obstacle, which is positioned above at least the second pattern emission unit 130 from a floor of a cleaning area.

The second pattern light P2 may have a different pattern from the first pattern light P1 and may be configured to include a horizontal line. Here, the horizontal line may not be necessarily a continuous line and may be configured with a dotted line.

In the FIG. 2 described above, an indicated emission angle θh may be a horizontal emission angle of the first pattern light P1 emitted from the first pattern emission unit 120, may indicate an angle of opposite ends of a horizontal line (or a dotted line) with respect to the first pattern emission unit 120, and may be determined in the range of 130° to 140°, but is not limited thereto. A dotted line shown in FIG. 2 is directed toward the front side of the mobile robot 1, and the first pattern light P1 may be configured to be symmetrical with each other. The first pattern light and the second pattern light are formed to be spaced apart from each other by a predetermined distance from the body 10. When a light pattern is emitted to an obstacle within the width of the detected light pattern based on a horizontal line of the pattern emission units, the light pattern may be analyzed, and a distance to the obstacle from the body of the mobile robot based on a position of the light pattern and a distance between the body and the light pattern.

The second pattern emission unit 130 may also have a horizontal emission angle that is determined in the range of 130° to 140° like the first pattern emission unit 120, and in some embodiments, the second pattern emission unit 130 may emit the second pattern light P2 at the same horizontal emission angle as the first pattern emission unit 120, and in this case, the second pattern light P1 may also be configured to be symmetrical with each other with respect to a dotted line shown in FIG. 2.

The image acquirer 140 may acquire an image of a front side of the body 10. The front side may refer to a side toward which the body of the mobile robot is driven and the light pattern is emitted from the body. In particular, the pattern light P1 and P2 are marked in the image (hereinafter, referred to as the acquired image) acquired by the image acquirer 140, and hereinafter, an image of the pattern light P1 and P2 marked in the acquired image is referred to as a light pattern, and the light pattern is an image acquired by forming the pattern light P1 and P2 that are substantially incident on an actual space, on an image sensor, and thus, the same reference numerals as the pattern light P1 and P2 are denoted for the light patterns, and images corresponding to the first pattern light P1 and the second pattern light P2 will be referred to as the first light pattern P1 and the second light pattern P2, respectively.

The image acquirer 140 may include a digital camera for converting an image of an object into an electrical signal and then re-converting the electrical signal into a digital signal and recording the digital signal in a memory device, and the digital camera may include an image sensor (not shown) and an image processor (not shown).

An image sensor may be a device for converting an optical image into an electrical signal, and may include a chip formed by integrating a plurality of photo diode into each other, and in this case, the photo diode may be, for example, a pixel. Electric charges may be accumulated on each of pixels constituting an image formed on the chip via light passing through a lens, and the electric charges accumulated on the pixels may be converted into an electrical signal (e.g., voltage). As the image sensor, a charge coupled device (CCD), a complementary metal oxide semiconductor (CMOS), etc. have been well known.

The image processor may generate a digital image based on an analog signal output from an image sensor. The image processor may include an analog digital (AD) converter for converting an analog signal into a digital signal, a buffer memory for temporarily recording digital data according to the digital signal output from the AD converter, and a digital signal processor (DSP) for processing information recorded in the buffer memory to constitute a digital image.

The pattern detector 210 may detect the feature such as a dot, a line, and a surface from predetermined pixels constituting the acquired image and may detect the light patterns P1 and P2 or dots, lines, surfaces, etc. constituting the light patterns P1 and P2 based on the detected feature.

For example, the pattern detector 210 may extract lines formed by continuously configuring light pixels compared with the surrounding area and may extract a horizontal line constituting the first light pattern P1 and a horizontal line constituting the second light pattern P2.

However, the present invention is not limited thereto, and various schemes of extracting a pattern in a desired shape from a digital image have been known, and thus, the pattern detector 210 may extract the first light pattern P1 and the second light pattern P2 using these known technologies.

As shown in FIG. 7, the first pattern emission unit 120 and the second pattern emission unit 130 may be disposed to be symmetrical with each other. The first pattern emission unit 120 and the second pattern emission unit 130 may be disposed up and down by a distance of h3, and in this case, the first pattern emission unit may emit the first pattern light downward and the second pattern emission unit may emit the second pattern light upward, and thus, the pattern light emitted from the first pattern light and the pattern light emitted from the second pattern light may cross each other.

The image acquirer 140 may be disposed below the second pattern emission unit by a distance h2 to capture an image of a front side of the body 10 at a viewing angle θs in up and down directions. The image acquirer 140 may be installed at a position corresponding to a distance h1 from the floor. The image acquirer 140 may be installed at a position not to interrupt photograph of a front side of the body 10 in consideration of a shape of a bumper (not shown) constituting a lower end of a front portion of the body 10 of the mobile robot 1 or a structure for driving or cleaning.

The first pattern emission unit 120 or the second pattern emission unit 130 may be installed in such a way that directions toward which an optical axis of lenses included in each of the first and second pattern emission units 120 and 130 is directed correspond to a predetermined emission angle.

The first pattern emission unit 120 may emit downward the first pattern light P1 at a first emission angle θr1 and the second pattern emission unit 130 may emit upward the second pattern light P2 at a second emission angle θr2. In this case, the first emission angle and the second emission angle may be basically different, but as necessary, the first emission angle and the second emission angle may be set to be equal to each other. The first emission angle and the second emission angle may be 50° to 75°, but are not limited thereto. For example, the first emission angle may be set to 60° to 70° and the second emission angle may be set to 50° to 55°. The first and second emission angles may be changed depending on a structure of a lower bumper of the mobile robot 1 or a distance for detecting a lower object, and a height of an upper portion to be detected.

When pattern light emitted from the first pattern emission unit 120 and/or the second pattern emission unit 130 is incident on an obstacle, positions of the light patterns P1 and P2 of the acquired image may be changed depending on a position of the obstacle spaced apart from the first pattern emission unit 120. For example, when the first pattern light P1 and the second pattern light P2 are incident on a predetermined obstacle, the first light pattern P1 may be marked at a high position in the acquired image as the obstacle is positioned closer to the mobile robot 1, and in an opposite case, the second light pattern P2 may be marked a low position. That is, when distance data to an obstacle, corresponding to a row (a line including pixels arranged in a lateral direction) constituting an image generated by the image acquirer 140, is pre-stored and then the light patterns P1 and P2 detected from the image acquired through the image acquirer 140 are detected from a predetermined row, a position of the obstacle from the distance data to the obstacle corresponding to the row may be estimated.

The image acquirer 140 may be disposed in such a way that an optical axis of a lens is directed toward a horizontal direction, and θs shown in FIG. 7 may be a viewing angle of the image acquirer 140, but may be set to 100° or greater, in detail, 100° to 110°, but the present invention is not limited thereto.

A distance to the image acquirer 140 from the floor of the cleaning area may be determined as about 60 mm to about 70mm, and in this case, the floor of the cleaning area is present after D1 from the image acquirer in the image acquired by the image acquirer 140, and D2 is a position of the floor of the acquired image, at which the first light pattern P1 is marked. In this case, when the obstacle is positioned at D2, an image when the first pattern light P1 is incident on the obstacle may be acquired by the image acquirer 140. When the obstacle is positioned closer to the mobile robot 1 than D2, the first light pattern may be marked above a reference position 'ref1' so as to correspond to the incident first pattern light P1.

The reference position 'ref1' is a position at which the first light pattern is marked when the body 10 is positioned on a flat floor, and when the first light pattern is emitted to D2, the image acquirer may be set to a position at which the first light pattern is photographed. The reference position may be a reference for determining a flat state of a floor without an obstacle in front of the body, that is, a normal state.

Here, a distance to D1 from the body 10 may be 100 mm to 150 mm and a distance to D2 may be 180 mm to 280 mm, but the present invention is not limited thereto. D3 may be a distance to a most protruding portion at which second pattern light is incident from a portion of a front side of a body, and the obstacle is detected while the body is moved, and thus, D3 is a minimum distance for detecting the obstacle at a front side (upper portion) without collision with the obstacle. D3 may be set to about 23 mm to about 30 mm.

During driving of the body 10, when the first light pattern P1 disappears from the acquired image or on a portion of the first light pattern is marked in the acquired image, the obstacle information obtainer 220 may determine that a cliff is present around the mobile robot 1.

When the first light pattern is not marked in the acquired image, the obstacle information obtainer 220 may recognize a cliff present in front of the mobile robot 1. When a cliff (e.g., stair) is present in front of the mobile robot 1, the first pattern light is not incident on the floor, and thus, the first light pattern P1 may disappear from the acquired image.

The obstacle information obtainer 220 may determine that the cliff is present in front of the body 10 to be spaced apart from the body 10 by a distance D2, based on the distance D2. In this case, when the first pattern light P1 has a cross pattern, a horizontal line disappears and only a vertical line is marked, and thus, the obstacle information obtainer 220 may determine that the cliff is present.

When a portion of the first light pattern is not marked, the obstacle information obtainer 220 may determine that a cliff is present on the left or right of the mobile robot 1. When a right portion of the first light pattern is not marked, obstacle information obtainer 220 may determine that the cliff is present on the right of the mobile robot 1.

Accordingly, based on the cliff information recognized by the obstacle information obtainer 220, the driving controller 230 may control the driving driver 300 to drive the mobile robot 1 along a path along which the mobile robot 1 does not fall of the cliff.

When the cliff is present in front of the mobile robot 1, the driving controller 230 may move the mobile robot 1 forward by, for example, D2 or less and may re-check whether the cliff is present using a cliff sensor installed below the body. The mobile robot 1 may primarily check the cliff through the acquired image and may be moved by a predetermined distance to secondarily check the cliff through the cliff sensor.

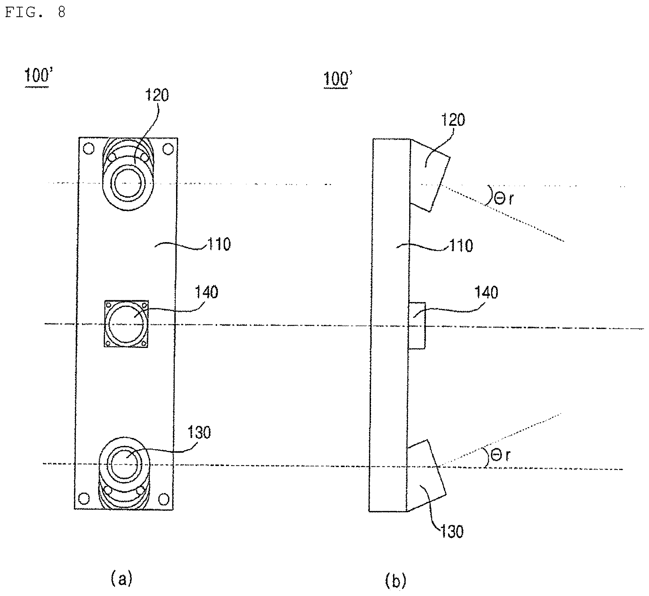

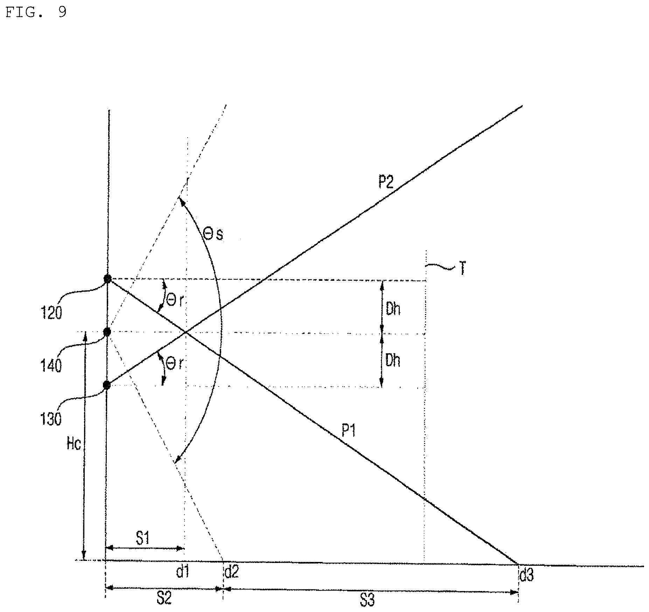

FIG. 8 is a front view and a side view of an obstacle detector according to the second embodiment of the present invention. FIG. 9 is a diagram showing a pattern emission range and an obstacle detection range of the obstacle detector of FIG. 8.

As shown in FIGS. 8A and 8B, the obstacle detection unit 100' according to the second embodiment may include the first and second pattern emission units 120 and 130 and the image acquirer 140. The same reference numeral is used for the same component as in the aforementioned obstacle detection unit 100 according to the first embodiment, and thus, a detailed description of the same component is omitted below.

The obstacle detection unit 100'may further include a module frame 110 that is fixed to a front surface of the casing 11 and vertically extends in a long way, but in some embodiments, the first pattern emission unit 120, the second pattern emission unit 130, and/or the image acquirer 140 may be fixed directly to the casing 11 without the module frame 110.

The obstacle detection unit 100' according to the second embodiment may be configured in such a way that the first pattern emission unit 120, the image acquirer 140, and the second pattern emission unit 130 are disposed in a line. In detail, the image acquirer 140 may be disposed between the first pattern emission unit 120 and the second pattern emission unit 130.

The first pattern emission unit 120 installed at an upper side may emit the first pattern light toward a lower side of a front side of the body 10, and the second pattern emission unit 130 installed at a lower side may emit the second pattern light toward an upper side of the front side of the body 10.

The first pattern light P1 may be emitted toward a floor of a cleaning area. The second pattern light P2 may be incident on an obstacle or a predetermined portion of an obstacle, which is positioned above at least the second pattern emission unit 130 from the floor of the cleaning area.

The image acquirer 140 may acquire an image of a front side of the body 10. In particular, the pattern light P1 and P2 may be marked in the image (hereinafter, referred to as the acquired image) acquired by the image acquirer 140, and hereinafter, an image containing the pattern light P1 and P2 marked in the acquired image is an image of the pattern light P1 and P2 incident on an actual space formed on an image sensor in a light pattern, and thus, may be denoted by the same reference numerals as those of the pattern light P1 and P2 for descriptions.

As shown in FIG. 9, the obstacle detection unit 100' according to the second embodiment may be configured in such a way that the first pattern emission unit 120 is disposed above the image acquirer 140 to be spaced apart therefrom by a distance Dh and the second pattern emission unit 130 is disposed below the image acquirer 140 to be space apart therefrom by a distance Dh. Hereinafter, an angle between a horizontal line and an emission direction of the first pattern emission unit 120 or the second pattern emission unit 130 is defined as a vertical emission angle. In detail, the vertical emission angle may be defined as an angle between a horizontal line and a direction toward which an optical axis of lenses included in each of the first and second pattern emission units 120 and 130 is directed.

The first vertical emission angle of the first pattern emission unit 120 and the second vertical emission angle of the second pattern emission unit 130 may have the same value, that is, θr. However, the first pattern emission unit 120 may emit the first pattern light P1 at an angle θr that is an angle directed downward based on a horizontal line, and the second pattern emission unit 130 may emit the second pattern light P2 at an angle θr that is an angle directed upward based on a horizontal line. θr may be determined in the range of 20° to 30°, but is not limited thereto.

As such, the first pattern emission unit 120 and the second pattern emission unit 130 may be disposed to be symmetrical with each other based on the image acquirer 140 and may be configured to emit light at the same vertical emission angle θr in opposite directions.

Such a symmetrical structure may facilitate calibration or product initialization. When pattern light emitted from the first pattern emission unit 120 or the second pattern emission unit 130 is incident on an obstacle, positions of the light patterns P1 and P2 of the acquired image may be different depending on a position of the obstacle spaced apart from the first pattern emission unit 120. For example, when the first pattern light P1 and the second pattern light P2 are incident on a predetermined obstacle, as the obstacle is positioned closer to the mobile robot 1, the first light pattern P1 -in particular, a horizontal pattern Ph- of the acquired image is marked at a high position, and on the other hand, the second light pattern P2 is marked at a low position. That is, when distance data to an obstacle, corresponding to a row (a line including pixels arranged in a lateral direction) constituting an image generated by the image acquirer 140, is pre-stored and then the light patterns P1 and P2 detected from the image acquired through the image acquirer 140 are detected from a predetermined row, a position of the obstacle from the distance data to the obstacle corresponding to the row may be estimated.

However, to accurately perform this procedure, it needs to be assumed that the first pattern emission unit 120 and the second pattern emission unit 130 are arranged to each accurately emit light at a predetermined vertical emission angle (θr). Whether such assumption is achieved may be checked through a calibration procedure. Calibration may be checked through the following procedure.

The obstacle detection unit 100' may be fixed and a vertical incident plate T (refer to FIG. 7) having a plate directed toward the obstacle detection unit 100'may be installed in front of the obstacle detection unit 100' to be spaced apart therefrom by a predetermined distance. A position of the incident plate T may be a position at which the first pattern light P1 is focused.

In this state, the first pattern emission unit 120 may emit light and the image acquirer 140 may acquire an image. The first light pattern P1 incident on the incident plate T may be marked in the acquired image. Here, since a distance to the incident plate T from the obstacle detection unit 100 is already known, when the obstacle detection unit 100' is normally manufactured without error, the horizontal line Ph of the first light pattern P1 needs to be marked at a predetermined position ref1 (hereinafter, referred to as a reference position) of the acquired image.

When an emission direction of the second pattern emission unit 130 is checked, the obstacle detection unit 100' may be upside down, and then, the aforementioned calibration procedure may be repeatedly performed. That is, the obstacle detection unit 100' may be upside down such that the second pattern emission unit 130 is positioned above the image acquirer 140, and then, the second pattern emission unit 130 may emit light such that the image acquirer 140 acquires an image containing the second light pattern P2 focused on the incident plate T. In this case, when the second pattern emission unit 130 is normal, the second light pattern P2 needs to be detected at the reference position ref1. The image acquirer 140 may be disposed in such a way that an optical axis of a lens is direction toward a horizontal direction, and θr may be a viewing angle of the image acquirer 140 and may be set to 100° or greater, in detail, 100° to 110°, but the present invention is not limited thereto.

Such calibration procedure may also be applied to the obstacle detection unit 100 according to the first embodiment in the same way.

A distance between a floor in a cleaning area and the image acquirer 140 may be determined between about 145 mm and about 155 mm, and in this case, the floor in the cleaning area may be present after a point indicated by d2 in the image acquired the image acquirer 140, and S2 may indicate a region up to a position d3 of a center point (an intersection point between the horizontal line Ph and the vertical line Pv) of the first light pattern P1 of the floor marked in the acquired image. In particular, when an obstacle is present in the region S2, an image formed by emitting the first pattern light P1 on the obstacle may be acquired by the image acquirer 140. Here, a distance to d2 from the body 10 may be set to 100 mm to 120mm, and d3 may be positioned about 400 mm from the mobile robot 1, but the present invention is not limited thereto.

S1 (which is a region up to d1 from the mobile robot 1) shown in FIG. 9 indicates a region in which positions of the first light pattern P1 and the second light pattern P2 are reversed, and when an obstacle is positioned in the region S1, the first pattern light P1 is positioned above the second pattern light P2 in the acquired image. In this case, d1 may be a position spaced apart from the mobile robot 1 by 70 mm to 80 mm, but the present invention is not limited thereto.

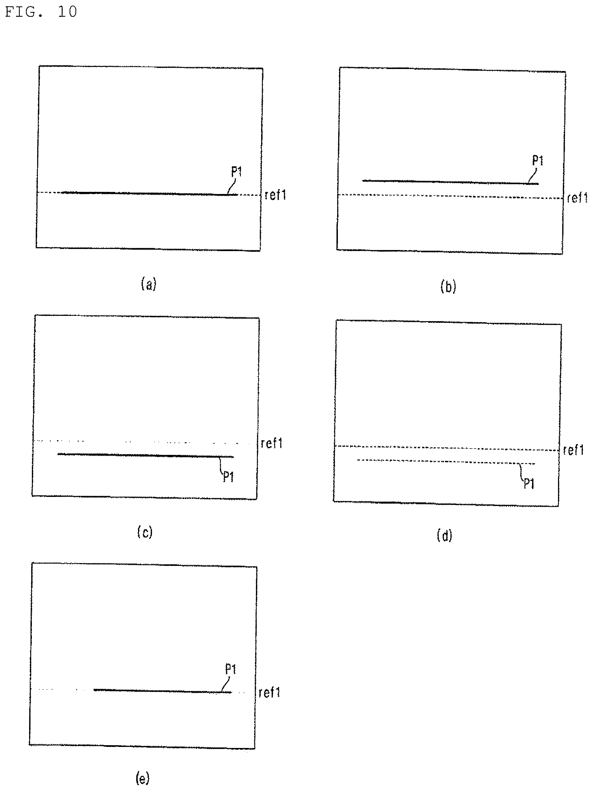

FIG. 10 is a diagram showing a pattern light emitted by the first pattern emission unit shown in FIG. 1A.

Upon receiving an acquired image, the pattern detector 210 may detect the first light pattern or the second light pattern from the acquired image input from the image acquirer 140 and may apply the first light pattern or the second light pattern to the obstacle information obtainer 220.

The obstacle information obtainer 220 may analyze the first light pattern or the second light pattern detected from the acquired image and may compare a position of the first light pattern with the reference position 'ref1' to determine an obstacle.

As shown in FIG. 10A, when a horizontal line of the first light pattern P1 is positioned at the reference position 'ref1', the obstacle information obtainer 220 may determine the first light pattern P1 to be in a normal state. In this case, the normal state refers to a state in which a floor is flat without unevenness, an obstacle is not present in a front side, and continuous driving is possible.

If an obstacle is present in an upper side of a front side of the mobile robot, the second light pattern P2 is incident on the obstacle and is marked in the acquired image, and thus, the second light pattern P2 is not generally marked in a normal state.

As shown in FIG. 10B, when a horizontal line of the first light pattern P1 is positioned above the reference position 'ref1', the obstacle information obtainer 220 may determine that an obstacle is present in a front of a mobile robot.

As shown in the drawing, upon detecting an obstacle through the obstacle information obtainer 220, the driving controller 230 may control the driving driver 300 to avoid the obstacle while the mobile robot is driven. The obstacle information obtainer 220 may determine a position and size of the detected obstacle in response to the positions of the first light pattern P1 and the second light pattern P2 and whether the second light pattern is marked in the acquired image. The obstacle information obtainer 220 may determine the position and size of the obstacle in response to a change in the first light pattern and the second light pattern that are marked in the acquired image while the mobile robot is driven.

The driving controller 230 may determine whether the mobile robot is continuously driven with respect to the obstacle or is driven to avoid the obstacle and may control the driving driver 300, based on information of the obstacle, input from the obstacle information obtainer 220. For example, the driving controller 230 may determine that the mobile robot is capable of driving when the obstacle is low, that is, has a height equal to or less than a predetermined height or the mobile robot is capable of entering a space between the obstacle and the floor.

As shown in FIG. 10C, the first light pattern P1 may be marked below the reference position 'ref1'. When the first light pattern P1 is marked below the preference position, the obstacle information obtainer 220 may determine that a downhill slope is present. A downhill slope may be differentiated from a cliff because the first light pattern P1 disappears in the case of the cliff.

As shown in FIG. 10D, when the first light pattern is not marked, the obstacle information obtainer 220 may determine that a cliff is present in a driving direction.

As shown in FIG. 10E, when a portion of the first light pattern is not marked, the obstacle information obtainer 220 may determine that a cliff is present on the left or right of the mobile robot. In this case, the obstacle information obtainer 220 may determine that a cliff is present on the left of the body 10.

When the first light pattern P1 has a cross shape, the obstacle information obtainer 220 may determine an obstacle in consideration of both a position of a horizontal line and a length of a vertical line.

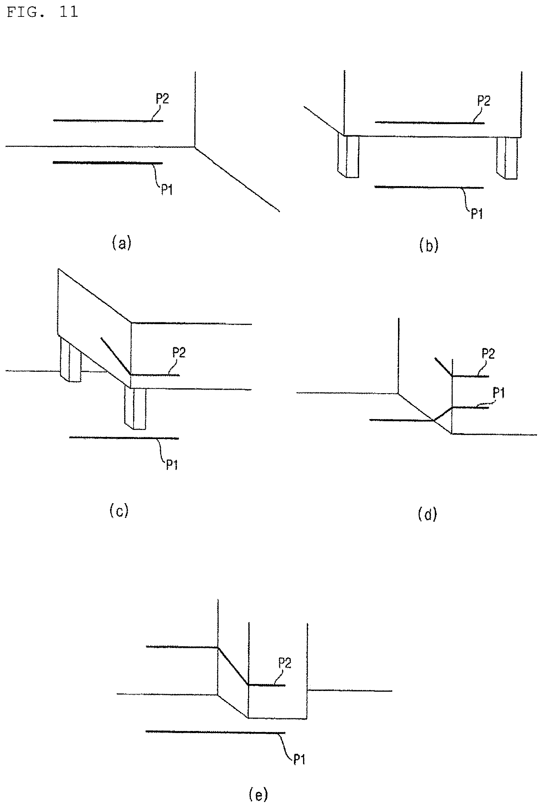

FIG. 11 is a diagram showing an example of a shape of a pattern emitted to an obstacle by the mobile robot shown in FIG. 1A.

As shown in FIG. 11, as pattern light emitted from the obstacle detection unit 100 is incident on an obstacle and a light pattern is marked in the captured acquired image, the obstacle information obtainer 220 may determine the position, size, and shape of the obstacle.

As shown in FIG. 11A, when a wall is present in front of the mobile robot while the mobile robot is driven, the first pattern light may be incident on the floor and the second pattern light may be incident on the wall. Accordingly, the first light pattern P1 and the second light pattern P2 may be marked as two horizontal lines in the acquired image. In this case, when a distance between the body 10 and the wall is longer than D2, as the first light pattern P1 is marked at the reference position 'ref1' but the second light pattern is marked, the obstacle information obtainer 220 may determine that an obstacle is present.

When the mobile robot approaches the wall such that the distance between the body 10 and the wall is less than D2, the first pattern light is incident on the wall but not the floor, and thus, the first light pattern is marked above the reference position 'ref1' and the second light pattern is marked above the first light pattern in the acquired image. The second light pattern is marked at a lower position as the mobile robot approaches the obstacle, and thus, the second light pattern is marked at a lower position compared with the case in which the distance between the wall and the body 10 is greater than D2. However, the second patter light may be marked above the reference position and the first light pattern.

Accordingly, the obstacle information obtainer 220 may calculate a distance to a wall that is an obstacle through the first light pattern and the second light pattern.

As shown in FIG. 11B, when an obstacle such as a bed or a drawer is present in front of the mobile robot, the first pattern light P1 and the second pattern light P2 may be incident on the floor and the obstacle as two horizontal lines, respectively.

The obstacle information obtainer 220 may determine the obstacle based on the first light pattern and the second light pattern. The height of the obstacle may be determined based on the position of the second light pattern and a change in the second light pattern during approach to the obstacle. Accordingly, the driving controller 230 may determine whether the mobile robot is capable of entering a space below the obstacle and may control the driving driver 300.

For example, when an obstacle with a predetermined space from the floor, e.g., a bed is present in the cleaning area, the driving controller 230 may recognize the space, and in detail, may recognize that a height of the space and may determine whether the mobile robot passes through the obstacle or avoids the obstacle. Upon determining that the height of the space is lower than the height of the body 10, the driving controller 230 may control the driving driver 300 to drive the body 10 to avoid the obstacle. On the other hand, when the height of the space is higher than the height of the body 10, the driving controller 230 may control the driving driver 300 to drive the body 10 to enter the space or to pass through the space.

In this case, in FIG. 11A above, the first light pattern and the second light pattern are marked as two horizontal lines, but the obstacle information obtainer 220 may differentiate the first light pattern and the second light pattern because a distance with the first light pattern and a distance with the second light pattern are different. In FIG. 11A, as the mobile robot approaches the obstacle, the first light pattern is marked above the reference position, but, as shown in FIG. 11B, even if the mobile robot approaches the obstacle positioned at an upper position, the first light pattern P1 is marked at the reference position 'ref1' and a position of the second light pattern P2 is changed, and thus, the obstacle information obtainer 220 may differentiate a type of the obstacle.

As shown in FIG. 11C, in the case of an edge of a bed or a drawer, the first pattern light P1 may be emitted as a horizontal line to the floor, and as the second pattern light P2 may be emitted to an edge of the obstacle, a portion of the second pattern light P2 may be marked as a horizontal line and the other portion may be incident on the obstacle as a diagonal line. The second light pattern is marked upward as the body 10 is positioned farther from the obstacle, and thus, in the case of the second light pattern incident on a side surface of the obstacle, the second light pattern may be marked as a diagonal line bent upward compared with a horizontal line emitted to a front surface of the obstacle.

As shown in FIG. 11D, when the body 10 approaches an edge of a wall by a predetermined distance or greater, a portion of the first pattern light P1 may be marked as a horizontal line above a reference position, may be partially incident on a side surface of the edge to be marked as a diagonal line bent downward, and may be marked as a horizontal line at the reference position with respect to the floor.

As shown in FIG. 11C above, the second pattern light may be partially marked as a horizontal line and may be partially emitted to a side surface of the edge to be marked as a diagonal line bent upward.

As shown in FIG. 11E, with respect to an obstacle protruding from a wall, the first light pattern may be marked as a horizontal line at the reference position 'ref1', a portion of the second light pattern P2 may be marked as a horizontal line on a protruding surface, another portion of the second light pattern P2 may be emitted to a side surface of the protruding surface to be marked as a diagonal line bent upward, and the other portion of the second light pattern P2 may be emitted to the wall to be marked as a horizontal line.

Accordingly, the obstacle information obtainer 220 may determine a position, a shape, and a size (height) of the obstacle based on the position and the shape of the first pattern light and the second pattern light.

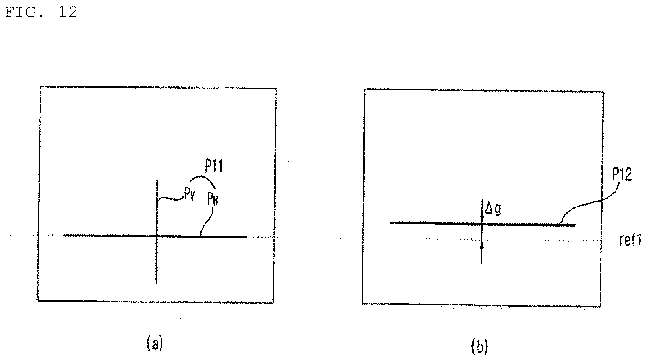

FIG. 12 is a diagram showing pattern light shown in FIG. 1B.

FIG. 12A shows the first light pattern P1 marked in the acquired image and shows the case in which the horizontal line Ph is detected at the reference position ref1.

As shown in FIG. 12B, when the second light pattern P2 is marked above the reference position ref1 by a distance Δg in the acquired image, this case corresponds to the case in which a vertical emission angle of the second pattern emission unit 130 is smaller than a predetermined value θr, and accordingly, the vertical emission angle of the second pattern emission unit 130 may be adjusted.

However, when Δg is within a predetermined error range, Δg may be stored, and then, when a distance to the obstacle from a position of the second light pattern P2 marked in the acquired image is calculated, the position of the second light pattern P2 may be compensated for using Δg, and thus, the distance to the obstacle may be more accurately calculated.

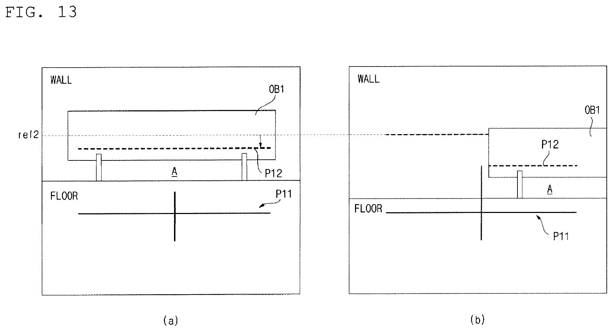

FIG. 13 is a diagram sowing an acquired image depending on a change in a position of the mobile robot shown in FIG. 1B.

FIG. 13A shows in which the acquired image when the mobile robot is positioned at a first position and a first obstacle is positioned in front of the mobile robot and FIG. 13B shows the case in which the acquired image when the mobile robot is changed and is positioned at a second position.

When an obstacle OB1 with a predetermined space A from a floor, e.g., a bed is present in a cleaning area, the space A may be recognized, and in detail, a height of the space A may be recognized and whether the mobile robot passes through the obstacle OB1 or the obstacle OB1 is avoided may be determined.

For example, as shown in FIG. 13A, when the 11^{th} pattern light P11 is incident on a floor in the space A and the 12^{th} pattern light P12 is incident on a structure (e.g., a frame for supporting a bed mattress) positioned below the space A, the obstacle information obtainer 220 included in the controller 200 may recognize that the obstacle is positioned above the portion on which the 11^{th} pattern light P11 is incident, and in particular, may recognize a distance to the obstacle OB1 from the mobile robot 1 based on the 12^{th} light pattern P12 marked in the acquired image, and because a vertical emission angle of the second pattern emission unit 130 is constant, the obstacle information obtainer 220 may recognize a height of a portion on which the second pattern light P2 is incident from the floor in the cleaning area, based on a distance to the obstacle OB1. Accordingly, the obstacle information obtainer 220 may determine the height of the space A based on these information items, and in detail, upon determining that the height of the space A is lower than the height of the body 10, the driving controller 230 may control the driving driver 300 to drive the body 10 to avoid the obstacle OB1. On the other hand, upon determining that the height of the space A is higher than the height of the body 10, the driving controller 230 may also control the driving driver 300 to enter the space A or to pass through the space A.

As shown in FIG. 13B, when the vertical line Pv of the 11^{th} pattern light P11 reaches a wall, the horizontal line Ph is incident on a floor, the 12^{th} light pattern P12 is partially incident on the obstacle OB1, and a portion of the second pattern light P2 is incident on the obstacle OB1 and another portion of the second pattern light P2 is incident on the wall, without the second pattern emission unit 130, obstacle information may be acquired based on only the 11^{th} pattern light P11 marked in the acquired image, and thus, in this case, only the fact that a wall is present in front of the mobile robot may be recognized, but like in the embodiment, when the second pattern emission unit 130 is present, the fact that the obstacle OB1 is present between the mobile robot 1 and the wall may be further recognized, and in particular, it may be possible to detect the obstacle OB1 in a wider area in a horizontal direction using the 12^{th} light pattern P12 configured to include the horizontal line Ph, and thus, it may be possible to also detect the obstacle OB1 positioned in a region to which the vertical line Pv of the 11^{th} pattern light P11 is not reached.

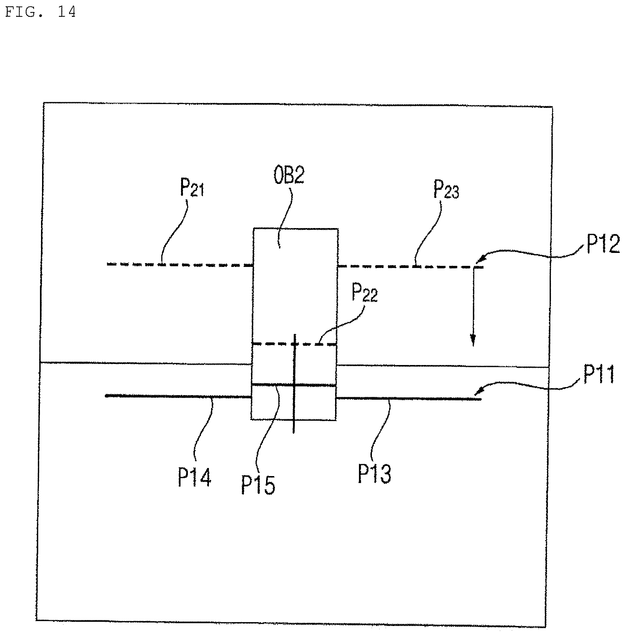

FIG. 14 is a diagram showing an acquired image of pattern light emitted to an obstacle of the mobile robot shown in FIG. 1B.

Referring to FIG. 14, the mobile robot 1 according to an exemplary embodiment of the present invention may recognize a three-dimensional shape of an obstacle through the 12^{th} light pattern P12 in addition to obstacle information recognizable through the 11^{th} pattern light P11. For example, an actual height of the obstacle OB2 is not capable of being overcome through driving of the mobile robot 1, but the 11^{th} pattern light P11 is incident on a lower region of the obstacle at a current position of the mobile robot 1, and thus, without the second pattern emission unit 130, the driving controller 230 may determine that the body 10 is capable of going over the obstacle OB2 and may control the body 10 to drive toward the obstacle OB2, and then, as the body 10 approaches the obstacle OB2, a position of the 12^{th} light pattern P12 may be gradually raised on the acquired image, and upon determining that a height of the obstacle OB2 is capable of being overcome by the body 10, the driving controller 230 may control the driving driver 300 to drive to avoid the obstacle OB2.

On the other hand, according to the exemplary embodiment, when the second pattern emission unit 130 is used, the 12^{th} light pattern P12 is incident on the obstacle OB2 at a current position, and thus, a height of the obstacle OB2 may be pre-recognized, and a driving path may be more previously optimized to correspond to the recognized height.

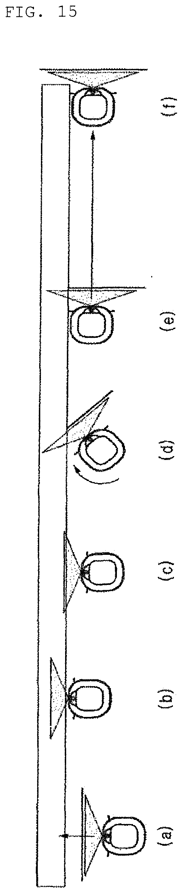

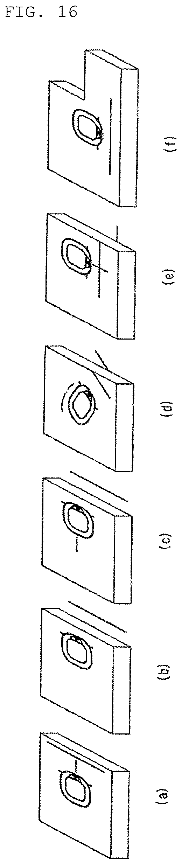

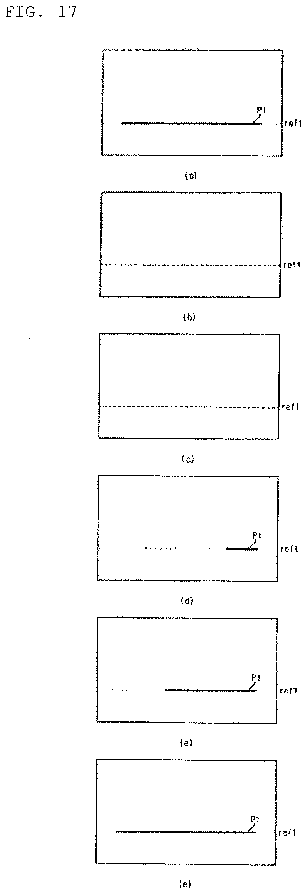

The obstacle information obtainer 220 may recognize a cliff positioned in front of the mobile robot 1 based on a length of the vertical line Pv marked in the acquired image. When a cliff (e.g., stair) is present in front of the mobile robot 1, a front end portion of the vertical line Pv is reached to a lower portion of the cliff and a portion emitted to the lower portion of the cliff is not marked in the acquired image, and thus, the length of the vertical line Pv shown in the acquired image may be reduced. Accordingly, when the length of the vertical line Pv is reduced, the obstacle information obtainer 220 may recognize that the cliff is present in front of the mobile robot 1 and may control the driving driver 300 to drive the mobile robot 1 to drive along a path not to fall off the cliff based on the recognized cliff information. In addition, when a portion (P13 to P15) of the horizontal line Ph is not marked in the acquired image, the obstacle information obtainer 220 may recognize that the cliff is present on the left or right of the body. FIG. 15 is a diagram for explanation of a method of avoiding a cliff of a mobile robot according to an exemplary embodiment of the present invention. FIG. 16 is a lateral perspective view of an operation of the mobile robot of FIG. 15. FIG. 17 is a diagram showing an example of a pattern emitted from a mobile robot when the mobile robot avoids a cliff in FIG. 15.

As shown in FIGS. 15 to 17, the mobile robot 1 may detect a cliff positioned in front thereof and may drive not to fall off the cliff.

As shown in FIG. 15A, while the mobile robot 1 is driven, if first pattern light emitted from the first pattern emission unit 120 is photographed through the image acquirer 140, the mobile robot 1 may determine the obstacle based on the first light pattern marked in the acquired image. As shown in FIG. 16A, before the mobile robot 1 reaches the cliff, the first patter light is emitted to a floor positioned in front of the mobile robot, and thus, a shown in FIG. 17A, the first pattern light marked in the acquired image may be marked to be in a normal state.

As shown in FIG. 5B, when the mobile robot 1 is driven forward to come in contact with the cliff, as shown in FIG. 16B, the first pattern light may be emitted below the cliff and may not be marked in the acquired image, as shown in FIG. 17B.

Accordingly, the obstacle information obtainer 220 may determine that a cliff is present in front of the mobile robot and may apply cliff information to the driving controller 230. In this case, the driving controller 230 may re-check whether a cliff is present through the cliff sensor.

The driving controller 230 may set a cliff mode and may control the driving driver 300 to drive the mobile robot backward, as shown in FIG. 15C. The driving controller 230 may drive the mobile robot backward to ensure a space in which the mobile robot is capable of stably rotating. As shown in FIG. 16C, when the mobile robot is driven backward, the driving controller 230 may control the driving driver 300 to rotate the mobile robot. As shown in FIG. 17C, when the mobile robot is drive backward, the first pattern light may not be marked. However, when a distance by which the mobile robot is driven backward is greater than D2, the first pattern light may be marked in the acquired image while the mobile robot is driven backward.

As shown in FIG. 15D, the mobile robot may be rotated in any one of left and right directions. As shown in FIG. 16D, a portion of the first pattern light may be emitted to the floor during rotation of the mobile robot, and accordingly, a portion of the first pattern light may be marked in the acquired image, as shown in FIG. 17D.

When a portion of the first light pattern is marked, the obstacle information obtainer 220 may calculate a length of the first light pattern and the driving controller 230 may determine whether the length of the first light pattern is equal to or greater than a predetermined value. When the length of the first light pattern is less than the predetermined value, the driving controller 230 may drive the mobile robot to additionally rotate.

As shown in FIGS. 15E and 16E, the mobile robot may be rotated by 90 degrees, and as shown in FIG. 17E, when the length of the first light pattern is equal to or greater than a predetermined value, the driving controller 230 may control the mobile robot to drive forward.

That is, when a cliff mode is reset, the mobile robot may be driven while maintaining a state in which the mobile robot does not fall off the cliff when a cliff is present on the left or right side, as shown in the drawing. In this case, due to the cliff, a portion of the first light pattern may not be marked. In a state in which a portion of the first light pattern is marked, the driving controller 230 may control the mobile robot to drive to maintain the length of the first light pattern, and thus, the mobile robot may be moved along the cliff not to fall off the cliff.

In this case, the mobile robot may be driven in a straight line without continuous check of a cliff, and thus, may avoid the cliff.

As shown in FIGS. 15F and 16F, when the mobile robot 1 deviates from a cliff, the first light pattern P1 may be normally marked as shown in FIG. 17F.

Accordingly, the obstacle information obtainer may release a cliff mode and the driving controller 230 may be normally driven.

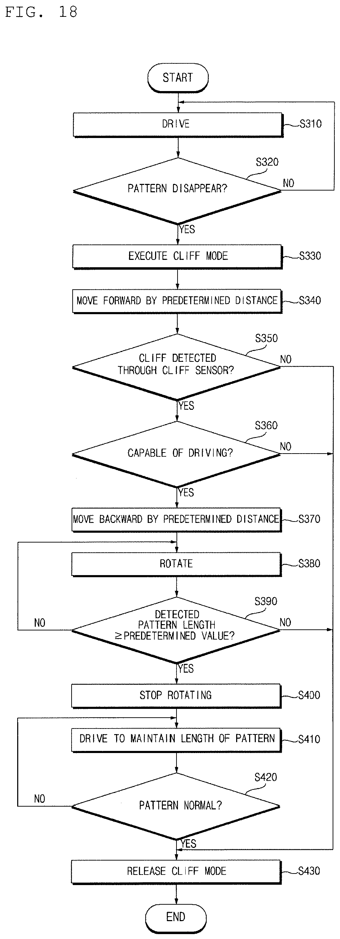

FIG. 18 is a flowchart showing a method of avoiding a cliff of a mobile robot according to an exemplary embodiment of the present invention.

As shown in FIG. 18, while the mobile robot 1 is driven, the mobile robot 1 may detect an obstacle and may drive to avoid the obstacle based on the first light pattern P1 and the second light pattern P2 (S310). In this case, the first and second pattern emission units may emit light patterns, respectively, and the image acquirer may photograph the emitted light pattern and may input an acquired image. The pattern detector may detect a light pattern from the acquired image, and the obstacle information obtainer may analyze the detected light pattern to determine a position, a shape, a size, etc. of the obstacle. Accordingly, the driving controller 230 may determine whether the mobile robot is capable of being continuously driven with respect to the obstacle and may control the driving driver 300 to drive the mobile robot to avoid the obstacle.

While the mobile robot is driven, when the first light pattern in the acquired image is in a normal state and the first light pattern is not marked, the obstacle information obtainer may determine that a cliff is present in front of the mobile robot and may set a cliff mode (S330). The driving controller 230 may control a driving driver to drive the mobile robot to avoid the obstacle according to setting of the cliff mode.

In this case, when the mobile robot includes a cliff sensor, the driving controller 230 may drive the mobile robot to drive forward by a predetermine distance and may re-determine whether a cliff is present through the cliff sensor (S350). The cliff sensor may measure a distance to the floor, and when a signal is not received or the distance to the floor is equal to or greater than a predetermined distance, the cliff sensor may input a cliff signal. When the mobile robot does not include a cliff sensor, since the first pattern light is not marked in the acquired image, if a cliff mode is set, the driving controller may immediately drive the mobile robot to drive to avoid the cliff.

The driving controller may determine whether the mobile robot is capable of driving in response to a signal of the cliff sensor (S360) and may determine that the mobile robot is not capable of driving and may drive the mobile robot not to fall off the cliff and to avoid the cliff. In this case, the driving controller may determine that the mobile robot is capable of driving, may release the cliff mode, and may continuously drive the mobile robot in the case of a slope way in which a distance to the floor from the cliff sensor is equal to or less than a predetermined distance.

To avoid a cliff, the driving controller 230 may control the mobile robot 1 backward by a predetermined distance and may control then the driving driver 300 to rotate in one direction (S380). In this case, the mobile robot 1 may rotate in any one direction of left and right directions and may set a rotation direction based on obstacle information that is detected during driving of the mobile robot.

When a portion of the first light pattern is marked in the acquired image during rotation of the mobile robot, the obstacle information obtainer 220 may determine that the length of the first light pattern is equal to or greater than a predetermined value (S390). When the length of the first light pattern is less than the predetermined value, the mobile robot may be continuously rotated (S380, S390).

When the length of the first light pattern is equal to or greater than the predetermined value, the driving controller 230 may stop being rotated (S400).

As necessary, when the body 10 is rotated by a predetermined angle irrespective of the length of the first light pattern, the driving controller 230 may drive the mobile robot to be moved forward. However, after the mobile robot is rotated, the driving controller may drive the mobile robot when a portion of the first light pattern is marked in the acquired image, and when the first light pattern is not marked in the acquired image even after the mobile robot is rotated, the driving controller may determine that there is the possibility that the mobile robot falls off a cliff and may control the mobile robot to further drive or rotate.

The driving controller 230 may control driving to maintain the length of the first light pattern (S410). The obstacle information obtainer 220 may calculate the length of the first light pattern, and when the length of the first light pattern is reduced, the driving controller 230 may determine that the mobile robot approaches a cliff and may control the mobile robot to additionally rotate.

The obstacle information obtainer 220 may determine whether the length of the first light pattern marked in the acquired image is in a normal state, and in the case of the normal state, the obstacle information obtainer 220 may determine that the mobile robot avoids a cliff and may release a cliff mode (S430). That is, when the length of the first light pattern is in a normal state and the first light pattern is positioned at a reference position, the obstacle information obtainer 220 may determine the first light pattern to be in a normal state.

Accordingly, since the mobile robot avoids a cliff, the driving controller 230 may control the driving driver 300 to subsequently perform a predetermined operation, e.g., cleaning or movement to a specific position, and accordingly, the cleaning unit 310 may also absorb surrounding foreign substances to perform cleaning while the mobile robot is driven.

Accordingly, the mobile robot 1 may determine a cliff using a light pattern and may be driven at a predetermined position not to fall off the cliff without repeated approach to the cliff to avoid the cliff for a short time. According to the present invention, the mobile robot may immediately avoid a cliff without repeated approach to the cliff, and thus, the mobile robot may be prevented from falling off the cliff, thereby enhancing driving safety.

## Claims

1. A mobile robot (1) comprising:
a body (11) driven in a cleaning area and for absorbing foreign substances on a floor in the cleaning area;
a first pattern emission unit (120) disposed on a front surface of the body (11) and for emitting first pattern light toward a lower side of a front side of the body (11);
a second pattern emission unit (130) disposed on the front surface of the body, disposed below the first pattern emission unit (120), and for emitting second pattern light toward an upper side of the front side of the body (11);
an image acquirer (140) disposed on the front surface of the body and for acquiring an image of the front side of the body (11); and
a controller (200) for detecting a first light pattern corresponding to the first pattern light and a second light pattern corresponding to the second pattern light from the acquired image input from the image acquirer (140), determining an obstacle, and performing control to pass or avoid the obstacle, **characterised in that** the controller (200) determines a cliff based on a shape of the first light pattern marked in the acquired image, controls the mobile robot (1) to be driven along a path along which the mobile robot (1) does not fall off the cliff, and controls driving of the mobile robot (1) not to reduce a length of the first light pattern.

2. The mobile robot (1) of claim 1, wherein the first pattern emission unit (120), the second pattern emission unit (130), and the image acquirer (140) are disposed in a line, the image acquirer (140) is disposed below the second pattern emission unit (130), and
the first pattern emission unit (120) and the second pattern emission unit (130) are disposed up and down to be symmetrical with each other.

3. The mobile robot (1) of claim 1, wherein the first pattern emission unit (120) is configured to emit the first pattern light including a horizontal line and the second pattern emission unit (130) is configured to emit the second pattern light including a horizontal line.

4. The mobile robot (1) of claim 3, wherein the first pattern light is configured with a pattern including a vertical line in addition to the horizontal line.

5. The mobile robot (1) of claim 1, wherein, when the first light pattern is not marked in the acquired image, or , when a portion of the first light pattern is marked in the acquired image, the controller (200) determines that a cliff is present in a driving direction.

6. The mobile robot (1) of claim 5, further comprising a cliff sensor configured at a lower side of a front side of the body toward a floor,
wherein, when the first light pattern is not marked in the acquired image, the controller (200) controls the mobile robot to be moved forward by a predetermined distance and lastly determines a cliff upon receiving a cliff signal from the cliff sensor.

7. The mobile robot (1) of claim 5, wherein, when a cliff is present in a driving direction, the controller (200) controls the mobile robot (1) to be moved backward, to rotate the body (11) by a predetermined angle, and then, to be driven along a path along which the mobile robot (1) does not fall off the cliff.

8. The mobile robot (1) of claim 5, wherein, when the first light pattern is marked at a predetermined reference position for determination of a normal state in the acquired image, the controller (200) determines that an obstacle is not present in front of the mobile robot and determines that the mobile robot avoids the cliff and performs a predetermined operation.

9. The mobile robot (1) of claim 1, wherein the controller (200) includes:
a pattern detector (210) for detecting the first light pattern and the second light pattern from the acquired image;
an obstacle information obtainer (220) for determining a position, size, and shape of an obstacle to correspond to a position and length of the first light pattern or the second light pattern; and
a driving controller (230) for controlling movement of the body (11) to drive the mobile robot (1) to avoid or pass the obstacle.

10. A method of controlling a mobile robot (1), the method comprising:
emitting first pattern light and second pattern light and driving the mobile robot (1) while capturing an image positioned in front of the mobile robot (1);
sensing a first light pattern corresponding to the first pattern light and a second light pattern corresponding to the second pattern light from the captured acquired image;
detecting an obstacle from the first light pattern or the second light pattern; **characterised in that** the method comprises further the steps of: detecting a cliff based on a shape of the first light pattern marked in the acquired image, among a plurality of obstacles; and
driving the mobile robot (1) along a path along which the mobile robot (1) does not fall off the cliff to avoid the cliff and driving the mobile robot along a path along which the length of the first light pattern is not reduced.

11. The method of claim 10, further comprising: when the first light pattern is not marked in the acquired image, determining that the cliff is present in a driving direction.

12. The method of claim 10, further comprising: when a portion of the first light pattern is marked in the acquired image, determining that the cliff is present on the left or right of a body.

13. The method of claim 11, further comprising: when the first light pattern is not marked in the acquired image, moving the mobile robot forward by a predetermined distance and lastly determining a cliff upon receiving a cliff signal from a cliff sensor installed at a lower side of a front side of a body.

14. The method of claim 11, further comprising:
when a cliff is present in a driving direction, moving the mobile robot backward by a predetermined distance;
rotating the mobile robot at a predetermined angle; and
driving the mobile robot along a path along which the mobile robot does not fall off a cliff.

15. The method of claim 14, further comprising:
during rotation of the mobile robot, marking the first light pattern in the acquired image;
when a length of the first light pattern is less than a predetermined value, additionally rotating the mobile robot; and
when the length of the first light pattern is equal to or greater than the predetermined value, moving the mobile robot forward.

## Patentansprüche

1. Mobiler Roboter (1), mit:
einem Körper (11), der in einem Reinigungsbereich angetrieben wird und dazu vorgesehen ist, Fremdstoffe auf einem Boden im Reinigungsbereich zu absorbieren;
einer ersten Musteremissionseinheit (120), die auf einer Vorderseite des Körpers (11) angeordnet und dazu vorgesehen ist, Licht mit einem ersten Muster in Richtung zu einer Unterseite eines Bereichs vor dem Körper (11) zu emittieren;
einer zweiten Musteremissionseinheit (130), die an der Vorderseite des Körpers und unterhalb der ersten Musteremissionseinheit (120) angeordnet und dazu vorgesehen ist, Licht mit einem zweiten Muster in Richtung zu einer Oberseite des Bereichs vor dem Körper (11) zu emittieren;
einer Bildaufnahmeeinrichtung (140), die auf der Vorderseite des Körpers angeordnet und dazu vorgesehen ist, ein Bild des Bereichs vor dem Körper (11) aufzunehmen; und
einer Steuereinheit (200) zum Erfassen eines dem Licht mit dem ersten Muster entsprechenden ersten Lichtmusters und eines dem Licht mit dem zweiten Muster entsprechenden zweiten Lichtmusters von dem von der Bildaufnahmeeinrichtung (140) eingegebenen aufgenommenen Bild, Bestimmen eines Hindernisses und Ausführen einer Steuerung zum Passieren oder Meiden des Hindernisses;
**dadurch gekennzeichnet, dass**
die Steuereinheit (200) eine Stufe basierend auf einer Form des im aufgenommenen Bild markierten ersten Lichtmusters bestimmt, den mobilen Roboter (1) derart steuert, dass er entlang eines Pfades angetrieben wird, auf dem der mobile Roboter (1) nicht von der Stufe herunterfällt, und die Fahrt des mobilen Roboters (1) derart steuert, dass eine Länge des ersten Lichtmusters nicht abnimmt.

2. Mobiler Roboter (1) nach Anspruch 1, wobei die erste Musteremissionseinheit (120), die zweite Musteremissionseinheit (130) und die Bildaufnahmeeinrichtung (140) in einer Linie angeordnet sind, wobei die Bildaufnahmeeinrichtung (140) unterhalb der zweiten Musteremissionseinheit (130) angeordnet ist und die erste Musteremissionseinheit (120) und die zweite Musteremissionseinheit (130) oberhalb und unterhalb davon symmetrisch zueinander angeordnet sind.

3. Mobiler Roboter (1) nach Anspruch 1, wobei die erste Musteremissionseinheit (120) dafür konfiguriert ist, das Licht mit dem ersten Muster mit einer horizontalen Linie zu emittieren, und wobei die zweite Musteremissionseinheit (130) dafür konfiguriert ist, das Licht mit dem zweiten Muster mit einer horizontalen Linie zu emittieren.

4. Mobiler Roboter (1) nach Anspruch 3, wobei das Licht mit dem ersten Muster mit einem Muster konfiguriert ist, das zusätzlich zu der horizontalen Linie eine vertikale Linie enthält.

5. Mobiler Roboter (1) nach Anspruch 1, wobei, wenn das erste Lichtmuster in dem aufgenommenen Bild nicht markiert ist oder wenn ein Teil des ersten Lichtmusters in dem aufgenommenen Bild markiert ist, die Steuereinheit (200) bestimmt, dass eine Stufe in der Fahrtrichtung vorhanden ist.

6. Mobiler Roboter (1) nach Anspruch 5, ferner mit einem Stufensensor, der an einer Unterseite einer Vorderseite des Körpers in Richtung zu einem Boden konfiguriert ist,
wobei, wenn das erste Lichtmuster in dem aufgenommenen Bild nicht markiert ist, die Steuereinheit (200) den mobilen Roboter derart steuert, dass er sich über eine vorgegebene Strecke vorwärts bewegt, und schließlich eine Stufe bestimmt, wenn ein Stufensignal vom Stufensensor empfangen wird.

7. Mobiler Roboter (1) nach Anspruch 5, wobei, wenn eine Stufe in einer Fahrtrichtung vorhanden ist, die Steuereinheit (200) den mobilen Roboter (1) derart steuert, dass er sich rückwärts bewegt, der Körper (11) um einen vorgegebenen Winkel gedreht wird, und dann der mobile Roboter entlang eines Pfades angetrieben wird, auf dem der mobile Roboter (1) nicht von der Stufe herababfällt.

8. Mobiler Roboter (1) nach Anspruch 5, wobei, wenn das erste Lichtmuster an einer vorgegebenen Bezugsposition zum Bestimmen eines Normalzustandes in dem aufgenommenen Bild markiert ist, die Steuereinheit (200) bestimmt, dass kein Hindernis vor dem mobilen Roboter vorhanden ist, und bestimmt, dass der mobile Roboter die Stufe meidet und eine vorgegebene Operation ausführt.

9. Mobiler Roboter (1) nach Anspruch 1, wobei die Steuereinheit (200) aufweist:
einen Musterdetektor (210) zum Erfassen des ersten Lichtmusters und des zweiten Lichtmusters von dem aufgenommenen Bild;
eine Hindernisinformationsbeschaffungseinrichtung (220) zum Bestimmen einer Position, Größe und Form eines Hindernisses derart, dass sie einer Position und einer Länge des ersten Lichtmusters oder des zweiten Lichtmusters entsprechen; und
eine Fahrtsteuereinheit (230) zum Steuern der Bewegung des Körpers (11) zum Antreiben des mobilen Roboters (1) derart, dass er das Hindernis meidet oder passiert.

10. Verfahren zum Steuern eines mobilen Roboters (1), wobei das Verfahren die Schritte aufweist:
Emittieren von Licht mit einem ersten Muster und von Licht mit einem zweiten Muster und Antreiben des mobilen Roboters (1), während ein Bild eines Bereichs vor dem mobilen Roboter (1) aufgenommen wird;
Erfassen eines dem Licht mit dem ersten Muster entsprechenden ersten Lichtmusters und eines dem Licht mit dem zweiten Muster entsprechenden zweiten Lichtmusters von dem aufgenommenen Bild; und
Erfassen eines Hindernisses von dem ersten Lichtmuster oder dem zweiten Lichtmuster;
**dadurch gekennzeichnet, dass** das Verfahren ferner die Schritte aufweist:
Erfassen einer Stufe basierend auf einer Form des im aufgenommenen Bild markierten ersten Lichtmusters unter einer Vielzahl von Hindernissen; und
Antreiben des mobilen Roboters (1) entlang eines Pfades, auf dem der mobile Roboter (1) nicht von der Stufe herabfällt, um die Stufe zu meiden, und Antreiben des mobilen Roboters entlang eines Pfades, auf dem die Länge des ersten Lichtmusters nicht abnimmt.

11. Verfahren nach Anspruch 10, ferner mit dem Schritt: wenn das erste Lichtmuster in dem aufgenommenen Bild nicht markiert ist, Bestimmen, dass die Stufe in einer Fahrtrichtung vorhanden ist.

12. Verfahren nach Anspruch 10, ferner mit dem Schritt: wenn ein Teil des ersten Lichtmusters in dem aufgenommenen Bild markiert ist, Bestimmen, dass die Stufe auf der linken oder rechten Seite eines Körpers vorhanden ist.

13. Verfahren nach Anspruch 11, ferner mit dem Schritt: wenn das erste Lichtmuster in dem aufgenommenen Bild nicht markiert ist, Vorwärtsbewegen des mobilen Roboters um eine vorgegebene Strecke und schließlich Bestimmen einer Stufe beim Empfang eines Stufensignals von einem an einer Unterseite einer Vorderseite eines Körpers installierten Stufensensor.

14. Verfahren nach Anspruch 11, ferner mit den Schritten:
wenn eine Stufe in einer Fahrtrichtung vorhanden ist, Rückwärtsbewegen des mobilen Roboters um eine vorgegebene Strecke;
Drehen des mobilen Roboters um einen vorgegebenen Winkel; und
Antreiben des mobilen Roboters entlang eines Pfades, auf dem der mobile Roboter nicht von einer Stufe herunterfällt.

15. Verfahren nach Anspruch 14, ferner mit den Schritten:
Markieren des ersten Lichtmusters im aufgenommenen Bild während einer Drehbewegung des mobilen Roboters;
zusätzliches Drehen des mobilen Roboters, wenn eine Länge des ersten Lichtmusters kleiner als ein vorgegebener Wert ist; und
Vorwärtsbewegen des mobilen Roboters, wenn die Länge des ersten Lichtmusters größer oder gleich dem vorgegebenen Wert ist.

## Revendications

1. Robot mobile (1) comprenant :
un corps (11) entraîné dans une zone de nettoyage et pour absorber des substances étrangères sur un sol dans la zone de nettoyage ;
une première unité d'émission de motif (120) disposée sur une surface avant du corps (11) et pour émettre une première lumière à motif vers un côté inférieur d'un côté avant du corps (11) ;
une seconde unité d'émission de motif (130) disposée sur la surface avant du corps, disposée en dessous de la première unité d'émission de motif (120), et pour émettre une seconde lumière à motif vers un côté supérieur du côté avant du corps (11) ;
un dispositif d'acquisition d'image (140) disposé sur la surface avant du corps et pour acquérir une image du côté avant du corps (11) ; et
un dispositif de commande (200) pour détecter un premier motif de lumière correspondant à la première lumière à motif et un second motif de lumière correspondant à la seconde lumière à motif provenant de l'image acquise introduite à partir du dispositif d'acquisition d'image (140), déterminer un obstacle et effectuer une commande pour passer ou éviter l'obstacle, **caractérisé en ce que** le dispositif de commande (200) détermine une falaise sur la base d'une forme du premier motif de lumière marqué dans l'image acquise, commande le robot mobile (1) pour être entraîné le long d'un trajet le long duquel le robot mobile (1) ne tombe pas de la falaise, et commande l'entraînement du robot mobile (1) pour ne pas réduire une longueur du premier motif de lumière.

2. Robot mobile (1) selon la revendication 1, dans lequel la première unité d'émission de motif (120), la seconde unité d'émission de motif (130) et le dispositif d'acquisition d'image (140) sont disposés sur une ligne, le dispositif d'acquisition d'image (140) est disposé en dessous de la seconde unité d'émission de motif (130), et
la première unité d'émission de motif (120) et la seconde unité d'émission de motif (130) sont disposées vers le haut et vers le bas pour être symétriques l'une par rapport à l'autre.

3. Robot mobile (1) selon la revendication 1, dans lequel la première unité d'émission de motif (120) est configurée pour émettre la première lumière à motif comportant une ligne horizontale et la seconde unité d'émission de motif (130) est configurée pour émettre la seconde lumière à motif comportant une ligne horizontale.

4. Robot mobile (1) selon la revendication 3, dans lequel la première lumière à motif est configurée avec un motif comportant une ligne verticale en plus de la ligne horizontale.

5. Robot mobile (1) selon la revendication 1, dans lequel, lorsque le premier motif de lumière n'est pas marqué dans l'image acquise, ou, lorsqu'une partie du premier motif de lumière est marquée dans l'image acquise, le dispositif de commande (200) détermine qu'une falaise est présente dans une direction d'entraînement.

6. Robot mobile (1) selon la revendication 5, comprenant en outre un capteur de falaise configuré au niveau d'un côté inférieur d'un côté avant du corps vers un sol,
dans lequel, lorsque le premier motif de lumière n'est pas marqué dans l'image acquise, le dispositif de commande (200) commande le robot mobile pour se déplacer vers l'avant d'une distance prédéterminée et détermine enfin une falaise lors de la réception d'un signal de falaise à partir du capteur de falaise.

7. Robot mobile (1) selon la revendication 5, dans lequel, lorsqu'une falaise est présente dans une direction d'entraînement, le dispositif de commande (200) commande le robot mobile (1) pour se déplacer vers l'arrière, afin de mettre en rotation le corps (11) selon un angle prédéterminé, puis, pour être entraîné le long d'un trajet le long duquel le robot mobile (1) ne tombe pas de la falaise.

8. Robot mobile (1) selon la revendication 5, dans lequel, lorsque le premier motif de lumière est marqué à une position de référence prédéterminée pour la détermination d'un état normal dans l'image acquise, le dispositif de commande (200) détermine qu'un obstacle n'est pas présent devant le robot mobile et détermine que le robot mobile évite la falaise et effectue une opération prédéterminée.

9. Robot mobile (1) selon la revendication 1, dans lequel le dispositif de commande (200) comporte :
un détecteur de motif (210) pour détecter le premier motif de lumière et le second motif de lumière à partir de l'image acquise :
un dispositif d'obtention d'informations d'obstacle (220) pour déterminer une position,
une taille et une forme d'un obstacle qui doivent correspondre à une position et à une longueur du premier motif de lumière ou du second motif de lumière ; et
un dispositif d'entraînement (230) pour commander un déplacement du corps (11) pour entraîner le robot mobile (1) afin d'éviter ou passer l'obstacle.

10. Procédé de commande d'un robot mobile (1), le procédé comprenant :
l'émission d'une première lumière à motif et d'une seconde lumière à motif et
l'entraînement du robot mobile (1) tout en capturant une image positionnée devant le robot mobile (1) ;
la détection d'un premier motif de lumière correspondant à la première lumière à motif et un second motif de lumière correspondant à la seconde lumière à motif à partir de l'image acquise capturée ;
la détection d'un obstacle à partir du premier motif de lumière ou du second motif de lumière ;
**caractérisé en ce que** le procédé comprend en outre les étapes de :
détection d'une falaise sur la base d'une forme du premier motif de lumière marqué dans l'image acquise, parmi une pluralité d'obstacles ; et
entraînement du robot mobile (1) le long d'un chemin le long duquel le robot mobile (1) ne tombe pas de la falaise afin d'éviter la falaise et l'entraînement du robot mobile le long d'un chemin le long duquel la longueur du premier motif de lumière n'est pas réduite.

11. Procédé selon la revendication 10, comprenant en outre : lorsque le premier motif de lumière n'est pas marqué dans l'image acquise, la détermination du fait que la falaise est présente dans une direction d'entraînement.

12. Procédé selon la revendication 10, comprenant en outre : lorsqu'une partie du premier motif de lumière est marquée dans l'image acquise, la détermination du fait que la falaise est présente à gauche ou à droite d'un corps.

13. Procédé selon la revendication 11, comprenant en outre : lorsque le premier motif de lumière n'est pas marqué dans l'image acquise, le déplacement du robot mobile vers l'avant d'une distance prédéterminée et enfin la détermination d'une falaise lors de la réception d'un signal de falaise à partir d'un capteur de falaise installé au niveau d'un côté inférieur d'un côté avant d'un corps.

14. Procédé selon la revendication 11, comprenant en outre :
lorsqu'une falaise est présente dans une direction d'entraînement, le déplacement du robot mobile vers l'arrière d'une distance prédéterminée ;
la mise en rotation du robot mobile selon un angle prédéterminé ; et
l'entraînement du robot mobile le long d'un chemin le long duquel le robot mobile ne tombe pas d'une falaise.

15. Procédé selon la revendication 14, comprenant en outre :
pendant la rotation du robot mobile, le marquage du premier motif de lumière dans l'image acquise ;
lorsqu'une longueur du premier motif de lumière est inférieure à une valeur prédéterminée, la mise en rotation par ailleurs du robot mobile ; et
lorsque la longueur du premier motif de lumière est supérieure ou égale à la valeur prédéterminée, le déplacement vers l'avant du robot mobile.
